# EUROPÄISCHE PATENTSCHRIFT

(11) **EP 3 807 143 B1**
(45) Veröffentlichungstag und Bekanntmachung des Hinweises auf die Patenterteilung: **04.10.2023**
(21) Anmeldenummer: 19725982.3
(22) Anmeldetag: 21.05.2019
(51) Int. Cl.: B62D 5/04

(54) **STEER-BY-WIRE-LENKUNG MIT EINEM SPINDELANTRIEB**
STEER-BY-WIRE STEERING SYSTEM HAVING A SPINDLE DRIVE
DIRECTION ASSISTÉE PAR CÂBLE AVEC ENTRAÎNEMENT PAR BROCHE

(30) Priorität: 18.06.2018 DE 102018209819
(43) Veröffentlichungstag der Anmeldung: 21.04.2021
(73) Patentinhaber: ZF Friedrichshafen AG, 88046 Friedrichshafen (DE)
(72) Erfinder: WENK, Stefan, 49453 Hemsloh (DE)
(74) Vertreter: ZF Friedrichshafen AG
(86) Internationale Anmeldenummer: PCT/EP2019/063050
(87) Internationale Veröffentlichungsnummer: WO 2019/242963

(56) Entgegenhaltungen:
- EP-A1- 1 110 845
- WO-A1-2015/007309
- DE-A1- 10 011 140
- DE-A1- 10 114 308
- DE-A1-102005 035 872
- US-A- 4 526 053
- US-A- 4 615 229
- NN: "Spielfreier Rollgewindetrieb", 1. Mai 1995 (1995-05-01), F & M. FEINWERKTECHNIK MIKROTECHNIK MESSTECHNIK, HANSER, MUNCHEN, DE, PAGE(S) 255, XP002126235, ISSN: 0944-1018

## Beschreibung

Die Erfindung betrifft eine steer-by-wire-Lenkung nach dem Oberbegriff des unabhängigen Anspruchs 1.

Aus der DE 10 2005 035 872 A1 ist eine elektromotorisch betätigte Stelleinheit zum Lenken der beiden Räder einer Achse eines zweispurigen Kraftfahrzeugs bekannt. Die Stelleinheit ist mit einer nicht selbst hemmenden Gewindespindel ausgebildet, durch deren lineare Verlagerung eine Verstellbewegung auf die Räder übertragbar ist. Die Gewindespindel wird mittels eines Rollgewindetriebs in Form eines Planetenwälzgewindespindelantriebs linear verlagert. Da der Spindelantrieb nicht selbsthemmend ausgebildet ist, ist eine Hemmeinheit vorgesehen, welche auf den Rotor des Elektromotors wirkt und diesen in Form einer elektromagnetisch betätigten Bremse festlegen kann. EP 1 110 845 offenbart den Oberbegriff des Anspruchs 1.

Es ist eine Aufgabe der Erfindung, eine elektromotorisch betätigte Stelleinheit zu verbessern.

Die Erfindung umfasst die Merkmale der unabhängigen Patentansprüche. Vorteilhafte Ausgestaltungen ergeben sich aus den Unteransprüchen.

Die Erfindung betrifft eine steer-by-wire-Lenkung für ein Kraftfahrzeug, vorzugsweise ausgebildet als Hinterachslenkung, welche mit einem speziellen Spindelantrieb ausgestattet ist. Steer-by-wire-Lenkungen weisen keine mechanische Verbindung zwischen Lenkrad und Lenkung auf. Die Lenkung der Räder wird bzw. die Änderungen des Radlenkwinkels werden über Stellsignale erreicht, welche von einem Steuergerät in den Aktuator oder die Aktuatoren der steer-by-wire-Lenkung übertragen werden. Mittels eines motorisch betriebenen Spindelantriebs wird somit eine Änderung zumindest eines Radlenkwinkels eines Rades eines Kraftfahrzeugs bewirkt. Der Spindelantrieb dieser steer-by-wire-Lenkung weist eine linear verschiebbare Gewindespindel auf, wobei der Spindelantrieb als Rollengewindetrieb ausgebildet ist. Die Erfindung zeichnet sich dadurch aus, dass der Rollengewindetrieb in seiner Antriebsrichtung und in seiner Rücktriebsrichtung unterschiedliche Wirkungsgrade aufweist. Ein Rollengewindetrieb zeichnet sich durch äußerst geringe Reibung in Antriebsrichtung aus und benötigt im Vergleich zu Kugelgewindetrieben oder insbesondere Trapezgewindetrieben ein vergleichsweise geringeres Antriebsmoment. Durch den Rollengewindetrieb wird vergleichsweise weniger Bauraum benötigt. Es kann dadurch insgesamt ein geringerer Bauraum für den Spindelantrieb erreicht werden, d. h. der für den Spindelantrieb bzw. die steer-by-wire-Lenkung benötigte Bauraum, auch Package genannt, fällt geringer aus und lässt sich somit leichter in Achskonzepte bei Kraftfahrzeugen integrieren. Ein geringeres Antriebsmoment bedingt auch einen vergleichsweise kleineren Motor, welcher aufgrund seiner geringeren Baugröße ebenfalls leichter in die steer-by-wire-Lenkung integrierbar ist. Rollengewindetriebe benötigen darüber hinaus nur sehr geringe Schmierstoffmengen, weisen eine hohe Tragfähigkeit auf, und garantieren einen geräuscharmen Betrieb bei langer Lebensdauer und kompakter Bauweise.

Bei dem vorliegenden Spindelantrieb ist die Spindelmutter ortsfest in einem Gehäuse des Aktuators der steer-by-wire-Lenkung gelagert, welche durch einen Elektromotor drehangetrieben wird. Die Drehbewegung der Spindelmutter kann durch einen achsparallel angeordneten Motor mittels Riementrieb oder aber mittels eines koaxialen oder auch als Hohlwellenmotor bezeichneten Motor realisiert werden.

Durch den elektrischen Drehantrieb wird die Spindelmutter in Drehung versetzt und wirkt über den Rollengewindetrieb mit dem Außengewinde der Spindel derart zusammen, dass dadurch letztlich die Axialbewegung der Spindel in die ein oder andere Richtung erzeugt wird. Die durch den Spindelantrieb erzeugte Verschiebung bzw. Verlagerung der Gewindespindel in axialer Richtung wird vorliegend als die Antriebsrichtung verstanden.

Eine Lenkung bei einem Kraftfahrzeug muss die Räder bezüglich ihrer Spur in Position halten. Die Lenkung führt die Räder bezüglich ihrer seitlichen Ausrichtung in Bezug auf die Längsachse des Fahrzeugs. Werden die Räder, z. B. bei einer Kurvenfahrt, in die ein oder andere Richtung gelenkt, treten an den Rädern Seitenkräfte aufgrund des Schräglaufwinkels auf. Die Lenkung muss also in der Lage sein, die Räder auch bei auftretenden Seitenkräften zu führen. Die Lenkung muss also den eingestellten Lenkwinkel beibehalten können. Die Lenkung muss insbesondere so ausgelegt sein, dass zusätzliche, über die normalen Seitenkräfte auftretende Missbrauchslasten, z. B. bei Auffahren auf einen Bordstein oder dergleichen, aufgenommen werden können. Die maximale zu erwartende Kraft im Wesentlichen auf die Längsachse der Spindel einwirkende Kraft ist somit für die Auslegung der radführenden Fahrwerksbauteile und somit auch der Lenkung bekannt. Das die Lenkbewegung einleitende und radführende Bauteil ist bei dem erfindungsgemäßen Spindelantrieb die axial verschiebbare Gewindespindel. Die Gewindespindel ist je nach Ausführung der Lenkung mit einem oder mit beiden Enden mittelbar oder unmittelbar mit dem bzw. den Radträger(n) verbunden, an welchen das jeweilige Rad der Achse drehbar angeordnet ist. Bei einer mittelbaren Verbindung sind zwischen der Gewindespindel und dem Radträger beispielsweise Lenker oder sogenannte Spurstangen angeordnet. Wirken bei einer Kurvenfahrt Seitenkräfte über die Räder auf die Lenkung, so ergibt sich eine Kraft in Rücktriebsrichtung auf den Spindelantrieb.

Der zuvor genannte Vorteil, dass ein Rollengewindetrieb in Antriebsrichtung äußerst geringe Reibung aufweist, bedeutet mit anderen Worten, dass Rollengewindetriebe einen hohen Wirkungsgrad haben. Dies gilt für herkömmliche Rollengewindetriebe, beispielsweise Planetenrollengewindetriebe, sowohl für die Antriebs- als auch für die Rücktriebsrichtung. Wird für den Spindelantrieb in Rücktriebsrichtung jedoch ein niedriger, insbesondere deutlich niedriger, Wirkungsgrad gewünscht, damit bei Auftreten von Seitenkräften keine selbsttätige Rückstellung der Lenkung beispielsweise in die Neutralposition (Lenkwinkel gleich null) erfolgt, sind aus dem Stand der Technik Lenkungen bzw. Spindelantriebe bekannt, welche eine Bremse oder Sperre aufweisen. Diese Bremsen oder Sperren bewirken eine Selbsthemmung in Rücktriebsrichtung.

Der Spindelantrieb gemäß der Erfindung ist jedoch derart ausgebildet, dass in dem Spindelantrieb in Rücktriebsrichtung keine Rückstellung der Lenkung erfolgt, ohne dabei zusätzliche Hemmeinheiten wie Sperren oder Bremsen einzusetzen. Der erfindungsgemäße Vorteil wird erreicht durch die Verwendung eines Rollengewindetriebes in dem Spindelantrieb, welches konstruktiv derart ausgelegt ist, dass in Rücktriebsrichtung ein geringer Wirkungsgrad als in Antriebsrichtung vorliegt. Dabei sind Antriebsrichtung und Rücktriebsrichtung differenziert voneinander zu betrachten.

Grundsätzlich sind zur Betrachtung der Wirkungsgrade in dem Spindeltrieb dessen Geometrie, die Oberflächengüte der Kontaktflächen im Bewegungsgewinde, der Steigungswinkel des Bewegungsgewindes, die Schmierung, die jeweilige Belastung (Lenckräfte, Seitenkräfte durch Räder), die Vorspannung der Spindelmutter, eine evtl. Schiefstellung des Spindeltriebs sowie die Wälzlager und ggfs. weitere Parameter zu berücksichtigen.

In Antriebsrichtung muss ein Eingangsdrehmoment durch einen Antrieb, z.B. einen Elektromotor aufgebracht werden. Es wird dazu ein Eingangsdrehmoment benötigt, welches in Antriebsrichtung zur axialen Verlagerung der Spindel die rotatorische Bewegung in eine translatorische Bewegung umsetzt. Für die Antriebsrichtung ergibt sich ein Wirkungsgrad aus dem Eingangsmoment und dem hierzu benötigten Drehmoment des E-Motors, der auch direkter Wirkungsgrad genannt wird.

In Rücktriebsrichtung wirkt eine axiale Last, also eine Kraft auf die Spindel, die in Zusammenwirken mit der Spindelmutter ein Moment bewirkt - aufgrund der Kraft auf die Spindel dreht sich die Spindelmutter und es kommt zur Verlagerung der Spindel und somit zur Veränderung des Radlenkwinkels. Es ergibt sich somit ein indirekter Wirkungsgrad aus welchem sich ein Moment berechnen lässt. Bei maximaler Kraft lässt sich bestimmen, wie groß das Moment zur Selbsthemmung im Spindeltrieb sein muss, damit es bei maximaler Kraft zu keiner Verlagerung der Spindel kommt.

Bei theoretischen Bedingungen, mit anderen Worten Laborbedingungen, lässt sich ein Reibbeiwert des Spindelantriebs bestimmen. Aus empirischen Ermittlungen wiederum sind Betriebsbedingungen in einem Spindelantrieb bekannt. Unter Berücksichtigung dieser Bedingungen und des theoretischen Reibbeiwertes lässt sich ein tatsächlich zu erwartender reeller Reibwert bestimmen, welcher z.B. 1/3 höher als der theoretische Reibwert sein kann. Insgesamt betrachtet wird sich daher der reelle Reibwert des Spindelantriebs um z.B. 1/20 verringern. Je nach Fahrwerk bzw. der verwendeten Bauteile kann die steer-by-wire-Lenkung entsprechend ausgelegt werden. Dabei kann erzielt werden, dass in Antriebs- und in Rücktriebsrichtung unterschiedliche Wirkungsgrade vorliegen, so dass eine unbeabsichtigte Radlenkwinkelverstellung nicht erfolgen kann.

Bevorzugt weist der Spindelantrieb in Antriebsrichtung einen derart hohen Wirkungsgrad auf, so dass der Spindelantrieb in Antriebsrichtung nicht selbsthemmend ausgebildet ist. Die zuvor bereits genannten Vorteile (geringer Bauraum, geringere Antriebleistung als bei selbsthemmendem Spindeltrieb mit geringem Wirkungsgrad etc.) erlauben eine kostengünstige Auslegung des Spindeltriebs für eine steer-by-wire-Lenkung.

Bevorzugt ist der Wirkungsgrad des Rollengewindetriebs in Rücktriebsrichtung derart gering, dass der Rollengewindetrieb im Wesentlichen selbsthemmend, vorzugsweise gänzlich selbsthemmend ausgelegt ist. Der Wirkungsgrad in Rücktriebsrichtung ist mit anderen Worten derart dimensioniert, dass bei einer im Wesentlichen axial auf die Spindel bzw. Gewindespindel wirkenden Kraft diese in Position verbleibt und nicht in Rücktriebsrichtung axial verlagert werden kann. Anders ausgedrückt, bedingt eine auf die Gewindespindel wirkende Axialkraft kein selbsttätiges Drehen der Spindelmutter. Eine Axialkraft aufgrund der Seitenkraft der Räder, beispielsweise bei einer Kurvenfahrt, bewirkt somit keine Veränderung des Radlenkwinkels. Dieses ist von Vorteil, weil kein zusätzliches Getriebe, eine Sperre oder eine Bremse oder eine andere Hemmeinheit benötigt wird, um in Rücktriebsrichtung die Selbsthemmung zu gewährleisten. In Rücktriebsrichtung ist damit die Führung der Räder ermöglicht. Bei Selbsthemmung ist keine axiale Verlagerung der Gewindespindel möglich. Der Wirkungsgrad in Rücktriebsrichtung ist anders ausgedrückt derart ausgelegt, dass in dem gesamten Spindelantrieb bei einer zu erwartenden im Wesentlichen entlang der Längsachse einwirkenden Kraft auf die Spindel, z.B. aufgrund der Auslegung des Fahrwerks des Kraftfahrzeugs bekannten maximalen Seitenkraft der Räder in einer Kurve, eine Selbsthemmung vorliegt.

Wenn hier von einer im Wesentlichen axial wirkenden Kraft gesprochen wird, so sind Kräfte gemeint, die im Winkel von 0 bis etwa 45° quer zur Längsachse auf die Spindel treffen bzw. wirken. Dieses kann je nach Konstruktion der Fahrzeugachse der Fall sein, wenn z.B. Lenker zwischen Radträger und Spindel mittels Gelenken angeordnet sind.

In einer weiteren bevorzugten Ausführungsform kann die steer-by.wire-Lenkung so ausgelegt sein, dass in Rücktriebsrichtung ein geringes Drehmoment erzeugt wird. Dieses Drehmoment entspricht bevorzugt in etwa dem Stillstandsmoment des Antriebsmotors.

Vorzugsweise ist dieses Drehmoment gleich dem Stillstandsmoment des Antriebsmotors. Die bei einer auf die Gewindespindel wirkende Kraft bewirkt eine Drehbewegung der Spindelmutter aufgrund des vorgenannten geringen Drehmoments. Dieses minimale Drehmoment darf im Idealfall nur so groß sein, dass das Stillstandsmoment des Antriebsmotors größer oder gleich ist. Das auch als Haltemoment im Stillstand bezeichnete Stillstandsmoment müsste also überwunden werden, damit der Motor durch die Drehung der Spindelmutter in Drehbewegung versetzt wird und die Spindel axial verlagert würde. Es kann ein passives Stillstandsmoment vorliegen, welches bei unbestromten Motor z. B. aufgrund der Permanentmagnete vorliegt, so dass sich die Antriebswelle des Motors nicht selbsttätig dreht. Das Haltemoment oder Stillstandsmoment kann auch aktiv vorliegen, wenn der Motor bestromt ist, sich jedoch nicht dreht. Mit anderen Worten kann das Stillstandsmoment der Antriebseinheit, also des Elektromotors, das rückwirkende Drehmoment aufgrund der axial in Rücktriebsrichtung wirkenden Kraft auf die Gewindespindel kompensieren. Das Stillstandsmoment kann durch eine Steuerung bzw. Regelung des Motors geregelt sein oder mit anderen Worten variabel sein. Hierbei ist zusätzlich die Übersetzung des Spindelantriebes bzw. Rollengewindetriebes zu berücksichtigen.

In einer bevorzugten Ausführungsform ist der Rollengewindetrieb als ein Rollengewindetrieb mit Rollenrückführung ausgebildet. Im Gegensatz zum Planetenrollengewindetrieb bewegen sich die ebenfalls um die Spindel herum achsparallel zur Längsachse der Gewindespindel angeordneten Laufrollen des Rollengewindetriebs mit Rollenrückführung schneller in axialer Richtung, als die Spindelmutter. Die Laufrollen müssen daher durch eine besondere Geometrie an der Mutter von der Spindel abgehoben und zurückversetzt werden. Da sich die Rollen radial und axial relativ zur Mutter bewegen, können sie nicht wie beim Planetenrollengewindetrieb durch an den axialen Enden der Rollen angeordnete Führungsringe geführt werden, welche in der Spindelmutter festgelegt sind. Stattdessen werden die Laufrollen des Rollengewindetriebs mit Rollenrückführung von einer Art Käfig radial in Position gehalten. Für den Rollengewindetrieb mit Rollenrückführung ergibt sich der entscheidende Vorteil einer minimal möglichen Steigung, die nochmals geringer ist, als beim Planetenrollengewindetrieb. Das Gewinde der Rollen hat keine Steigung, sondern die Rollen haben Rillen. Daher ist die Steigung der Spindel feiner als diese bei einem Planetenrollengewindetrieb gewählt werden kann. Beispielsweise kann bei einer Gewindespindel mit einem Durchmesser von 32 mm eine Steigung von 1 mm gewählt werden. In Rücktriebsrichtung ergibt sich hierzu ein theoretischer Wirkungsgrad von beispielsweise 25 bis 30 %. Durch die Ausbildung des Rollengewindetriebs mit Rollenrückführung und Einflüssen wie Schmierung und Reibung ergibt sich beispielsweise ein praktischer Wirkungsgrad von lediglich noch 4 bis 7 %. Bei einer beispielhaften Missbrauchslast (maximal mögliche Seitenkraft von beispielsweise 50 kN) lässt sich ein Rücktriebsmoment errechnen, welches durch den Motor als Stillstandsmoment entgegengehalten werden muss. In dem vorliegenden Beispiel liegt dieses Stillstandsmoment beispielsweise bei etwa 0,22 bis 0,25 Nm. Ein solch geringes Drehmoment kann aufgrund des Stillstandsmoments des Elektromotors kompensiert werden. Im Ergebnis ist somit das Stillstandsmoment des Elektromotors ausreichend, damit in Rücktriebsrichtung keine axiale Verlagerung der Gewindespindel aufgrund einer von den Rädern der Fahrzeugachse erzeugten maximalen Seitenkraft auf die Gewindespindel stattfindet. Die radführende Funktion der steer-by-wire-Lenkung bleibt erhalten.

Bevorzugt zeichnet sich der Spindelantrieb dadurch aus, dass zur Festlegung des Spindelantriebs zusätzlich eine Hemmeinheit vorgesehen sein kann. Die Hemmeinheit bewirkt eine Kopplung zwischen Spindelmutter und Aktuator und/oder zwischen Spindel und dem Aktuator und/oder zwischen Spindel und Spindelmutter. Die Hemmeinheit ist vorzugsweise elektromagnetisch betätigt, wobei bei Bestromung die Hemmeinheit geöffnet wird, so dass bei Ausfall der Betriebsspannung die Hemmeinheit federbelastet in Richtung Sperren oder Bremsen geschaltet wird. Mit der zusätzlichen Hemmeinheit kann eine mechanische Sperre bewirkt werden, so dass der Elektromotor in seiner Drehung gehindert wird. Dieses kann erforderlich und somit von Vorteil sein, wenn beispielsweise bei abgestelltem Fahrzeug überhaupt keine Lenkbewegung mehr möglich sein soll. Eine Hemmeinheit kann auch dazu vorgesehen sein, dass diese die Bewegung der Spindelmutter und/oder der Gewindespindel bremsen bzw. verzögern kann. Auch kann beispielsweise verhindert werden, dass bei Ausfall des Elektromotors die Spindel in axialer Richtung aufgrund von dynamischen Lasten in dem Fahrzeugfahrwerk in eine Richtung wandert und sich so eine Änderung des Lenkwinkels einstellt, die nicht beabsichtigt ist. Dynamische Lasten sind wechselnde Lasten aus wechselnden Kraftrichtungen, die z.B. aufgrund eines einfedernden Rades über radführende Lenker auf den Spindelantrieb wirken können. Auf einer unebenen Strecke können derartige dynamischen Lasten auftreten. Selbsthemmende Spindelantriebe können bei wechselnden Lasten im Gegensatz zu konstanten oder schwellenden Kräften in Rücktriebsrichtung wandern, weshalb eine Hemmeinrichtung sinnvoll sein kann und zum Verhindern des Wanderns vorteilhaft zusätzlich eingesetzt werden kann.

Der Spindelantrieb weist bevorzugt einen Rollengewindetrieb auf, der spielfrei ausgebildet ist, so dass sich ein geräuscharmer Lauf des Spindelantriebs ergibt. Hierzu können einzelne Elemente des Spindelantriebs gegeneinander verspannt sein. Die Verspannung kann durch Anlaufscheiben oder Federn, z.B. Tellerfedern erfolgen.

Als Elektromotor eignet sich bevorzugt ein bürstenloser Vernier-Elektromotor. Diese Art von Elektromotoren bilden einen in hohem Maße effizienten Elektromotor aus, der im Vergleich zu herkömmlichen Elektromotoren eine verbesserte Volumeneffizienz aufweist. Ein Vernier-Motor kann bei geringerem Volumen ein höheres Drehmoment erzeugen, als ein herkömmlicher Elektromotor mit entsprechend größerem Volumen. Mit anderen Worten kann ein Elektromotor verkleinert werden und gleichzeitig eine höhere Leistung aufweisen. Dieses kommt bei dem vorliegenden Spindelantrieb einer weiteren Bauraumreduzierung zu Gute.

Die Erfindung wird nachfolgend anhand bevorzugter Ausführungsformen unter Bezugnahme auf die Zeichnungen beschrieben. In der Zeichnung zeigen:
- Fig. 1: eine schematische Draufsicht auf eine Hinterachse eines Fahrzeugs,
- Fig. 2: eine schematische Ansicht eines Aktuators bzw. einer steer-by-wire-Lenkung,
- Fig. 3: eine schematische Explosionsdarstellung des Spindelantriebs in Ausführung eines Rollengewindetriebes mit Rollenrückführung.

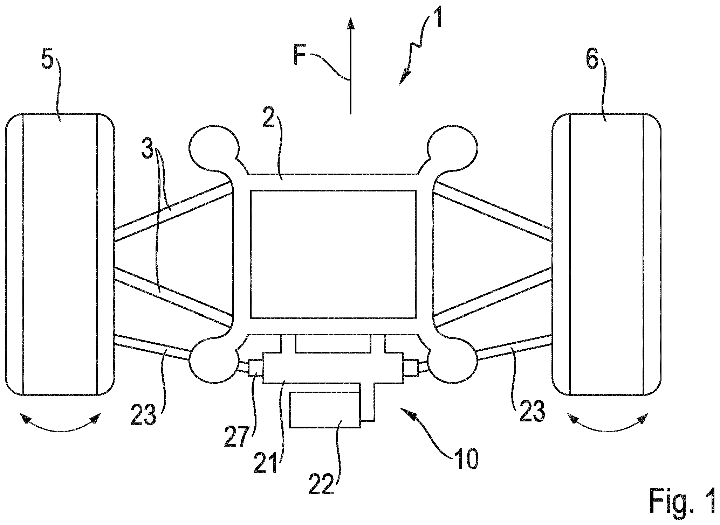

In der schematischen Darstellung gemäß Figur 1 ist eine Fahrzeugachse 1 gezeigt, hier dargestellt als eine Hinterachse mit einem Hilfsrahmen 2, der an einem Fahrzeugaufbau befestigt ist bzw. diesen bildet und mit der Karosserie eines Kraftfahrzeuges verbunden ist. Die Räder 5 und 6 sind mittels Lenkern 3 an dem Hilfsrahmen 2 angelenkt. Die Lenker 3 bilden die Radaufhängung für die Räder 5, 6. An dem Hilfsrahmen 2 ist ein Aktuator 10 einer steer-by-wire-Lenkung befestigt. Der Aktuator 10 ist mit seinem Gehäuse 21 an dem Hilfsrahmen befestigt. Der Aktuator 10 weist in der vorliegenden Ausführung als ein zentraler Aktuator eine durchgehende Gewindespindel 27 auf, welche durch das Gehäuse 21 des Aktuators 10 hindurchgeführt ist. Der Antriebsmotor 22 ist achsparallel zur Gewindespindel 27 angeordnet. An den Enden der Gewindespindel 27 sind Spurstangen 23 angelenkt, welche mit dem von dem Aktuator 10 abgewandten Ende jeweils mit dem nicht dargestellten Radträger der Räder 5 und 6 gelenkig verbunden sind. Es ist offensichtlich, dass bei einer axialen Verlagerung der Gewindespindel 27 in die linke oder rechte Richtung eine Veränderung des Radlenkwinkels erfolgt, weil die Spurstangen 23 eine Zwangsverbindung zwischen Rad bzw. Radträger und dem Aktuator 10 darstellen. Zur Lenkung der Räder 5, 6 sind diese um deren Hochachse drehbar an der Radaufhängung 3 angelenkt, welches durch die gebogenen Doppelpfeile unterhalb der Räder 5, 6 angedeutet ist.

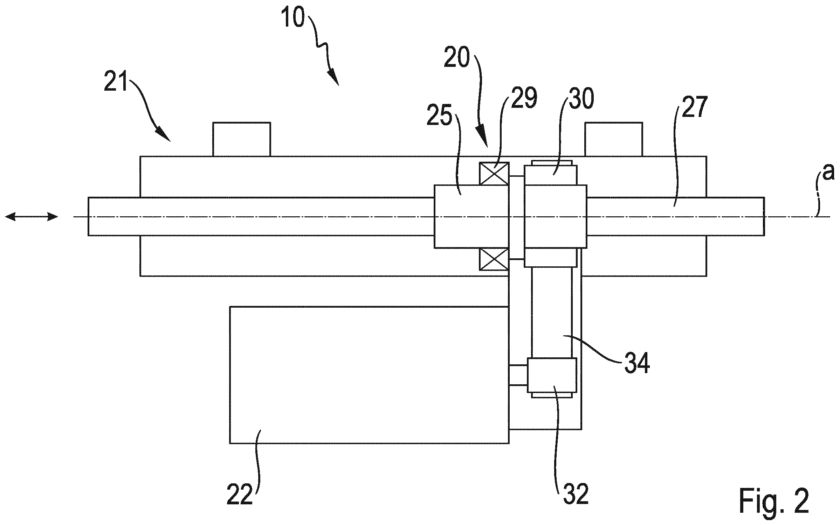

Figur 2 zeigt eine schematische Darstellung des in Figur 1 bereits gezeigten Aktuators 10. Der Aktuator 10 weist ein Gehäuse 21 auf, an dem achsparallel ein Antriebsmotor 22 angeordnet ist. In dem Gehäuse 21 ist der Spindelantrieb 20, bestehend aus der Spindelmutter 25 und der Gewindespindel 27, angeordnet. Die Spindelmutter 25 ist gegenüber dem Gehäuse mit einem Wälzlager 29 ortsfest und drehbar gelagert. Durch die Spindelmutter 25 hindurchgeführt und koaxial zu dieser angeordnet ist die Gewindespindel 27. Auf der von dem Wälzlager 29 abgewandten Seite der Spindelmutter 25 ist ein Riemenrad 30 ortsfest auf der Spindelmutter 25 angeordnet. Der Elektromotor 22 weist ein Antriebsritzel 32 auf. Ein Antriebsriemen 34 in Form eines Zahnriemens umschlingt sowohl das Antriebsritzel 32 als auch das Riemenrad 30, so dass bei Drehbewegung des Elektromotors bzw. Antriebsmotors 22 die Spindelmutter 25 in Drehbewegung um die Längsachse a versetzt wird. Je nach Drehrichtung der Spindelmutter 25 erfolgt eine lineare Verlagerung der Gewindespindel 27 in die eine oder andere Richtung entlang der Längsachse a, wie durch den Doppelpfeil angedeutet.

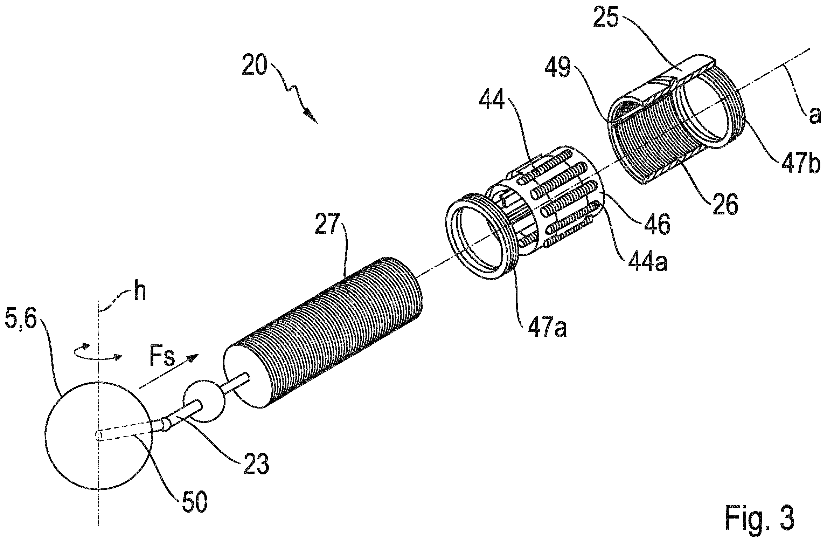

Figur 3 zeigt eine Explosionsdarstellung des in dem Aktuator 10 gemäß Figur 1 bzw. 2 zur Anwendung gedachten Rollengewindetriebes mit Rollenrückführung. Die Spindelmutter 25 weist an ihrer Innenseite ein Innengewinde 26 auf. An der Innenseite des Gewindes 26 ist des Weiteren ein axial verlaufender Vorsprung 49 angeordnet. Ein Käfig 46 weist konzentrisch zur Längsachse a angeordnete Aussparungen 44a auf, die konzentrisch zur Längsachse a angeordnet sind und die Gewinderollen 44 aufnehmen. Die Aussparungen 44a sind in etwa als Langlöcher an der Außenseite des Käfigs 46 angeordnet. Wenn sich der Käfig 46 mit den Gewinderollen 44 innerhalb der Spindelmutter 25 befindet, wird der Käfig 46 und somit auch die Gewinderollen 44 gegenüber der Spindelmutter 25 durch die endseitig bzw. stirnseitig der Spindelmutter 25 angeordneten Halteringe 47a, 47b in Position gehalten. Wenn die Spindelmutter 25 um die Gewindespindel 27 rotiert, wird aufgrund der Tatsache, dass die Gewinderollen 44 sowohl mit dem Außengewinde der Spindel 27 als auch mit dem Innengewinde 26 der Spindelmutter 25 in Eingriff sind, eine axiale Verlagerung der Gewindespindel 27 ermöglicht. Diese axiale Verlagerung entspricht der Antriebsrichtung der Gewindespindel. Nach einer Umdrehung der Spindelmutter 25 haben die Gewinderollen 44 entsprechend ihrer Gewindesteigung einen axialen Weg gegenüber der Spindelmutter 25 zurückgelegt. Daher müssen diese rückgeführt werden. Sie werden in der vorliegenden Ausführung durch den Vorsprung vom Innengewinde abgehoben und durch einen weiteren nicht gezeigten axialen Vorsprung am Haltering 47a axial rückgeführt und gelangen danach wieder in Eingriff mit dem Innengewinde 26 der Spindelmutter 25.

Des Weiteren ist schematisch ein Rad 5, 6 dargestellt, welches um eine Hochachse h lenkbar ist. Das Rad 5, 6 ist drehbar an einem Radträger 50 gelagert. Der Radträger 50 ist gelenkig mit einer Spurstange 23 verbunden, die an ihrem gegenüberliegenden Ende gelenkig mit dem Ende der Gewindespindel 27 verbunden ist. Wirkt nun eine Seitenkraft Fₛ, z. B. bei Kurvenfahrt auf die Gewindespindel 27, so ist dieses eine Kraft in Rücktriebsrichtung auf den Spindelantrieb 20, der aufgrund des geringen Wirkungsgrades nur ein sehr geringes Drehmoment an der Spindelmutter 25 erzeugt. Dieses Drehmoment kann aufgrund des Stillstandsmoments des Elektromotors kompensiert werden, so dass bei einer Seitenkraft sich der Radlenkwinkel nicht verändert, weil der Spindelantrieb in Rücktriebsrichtung somit selbsthemmend ausgelegt ist. Die Spindelmutter 25 wird nicht gedreht.

Der beispielhaft gezeigte Aktuator 10 gemäß den Figuren 1 und 2 ist ein Zentralsteller, der beidseitig wirkt und eine Lenkbewegung auf beide Räder einer Achse, wie in Figur 1 dargestellt, bewirken kann. Die Erfindung ist jedoch gleichermaßen anwendbar auf einen sogenannten Einzelsteller. Beim Einzelsteller wird die Spindel aus dem Gehäuse des Einzelstellers ein- und ausgefahren, oder mit anderen Worten ist der Einzelsteller in seiner Länge veränderlich. Wenn das Gehäuse karosseriefest, z. B. an einem Hilfsrahmen, angeordnet bzw. abgestützt ist, dann bewirkt die Längenänderung eine Stellbewegung im Sinne einer Lenkbewegung auf den Radträger eines Rades, so dass eine Änderung des Radlenkwinkels des betreffenden Rades herbeigeführt werden kann. Zwischen Radträger und Einzelsteller kann dabei auch ein Lenker angeordnet sein.

### Bezugszeichen

- 1: Fahrzeugachse
- 2: Hilfsrahmen, Fahrzeugaufbau
- 3: Lenker, Radaufhängung
- 5: Rad
- 6: Rad
- 10: Aktuator

- 20: Spindelantrieb
- 21: Gehäuse
- 22: Antriebsmotor, Elektromotor
- 23: Spurstange
- 25: Spindelmutter
- 26: Innengewinde
- 27: Gewindespindel, Spindel
- 29: Wälzlager
- 30: Riemenrad
- 32: Antriebsritzel
- 34: Riemenritzel

- 44: Gewinderollen
- 44a: Aussparungen
- 45: Spindelmutter
- 46: Käfig
- 47a: Haltering
- 47b: Haltering
- 49: Vorsprung
- 50: Radträger

- a: Längsachse
- h: Hochachse

## Patentansprüche

1. steer-by-wire-Lenkung für ein Kraftfahrzeug aufweisend einen Spindelantrieb (20) mit einer linear verschiebbaren Gewindespindel (27), wobei der Spindelantrieb (20) als Rollengewindetrieb ausgebildet ist, **dadurch gekennzeichnet, dass**
der Rollengewindetrieb in seiner Antriebsrichtung und in seiner Rücktriebsrichtung unterschiedliche Wirkungsgrade aufweist, so dass in dem Spindelantrieb in Rücktriebsrichtung keine Rückstellung der Lenkung erfolgt.

2. steer-by-wire-Lenkung nach Anspruch 1, **dadurch gekennzeichnet, dass** der Spindelantrieb (20) in Antriebsrichtung einen derart hohen Wirkungsgrad aufweist, so dass der Spindelantrieb (20) in Antriebsrichtung nicht selbsthemmend ausgebildet ist.

3. steer-by-wire-Lenkung nach Anspruch 1 oder 2, **dadurch gekennzeichnet, dass** der Wirkungsgrad des Rollengewindetriebs in Rücktriebsrichtung derart gering ist, dass dieser im Wesentlichen selbsthemmend ist.

4. steer-by-wire-Lenkung nach Anspruch 3, **dadurch gekennzeichnet, dass** in dem Spindelantrieb (20) bei einer maximalen im Wesentlichen axial auf die Gewindespindel (27) in Rücktriebsrichtung wirkenden Kraft ein minimales Drehmoment erzeugt wird, welches etwa dem Stillstandsmoment des Antriebsmotors (22) entspricht, vorzugsweise gleich dem Stillstandsmoment des Antriebsmotors (22) ist.

5. steer-by-wire-Lenkung nach einem der vorhergehenden Ansprüche, **dadurch gekennzeichnet, dass** der Rollengewindetrieb mit Rollenrückführung ausgebildet ist.

6. steer-by-wire-Lenkung nach einem der vorhergehenden Ansprüche, **dadurch gekennzeichnet, dass** zur Festlegung des Spindelantriebs (20) zusätzlich eine Hemmeinheit vorgesehen sein kann, vorzugsweise elektromagnetisch betätigt, welche form- und/oder kraftschlüssig eine Kopplung zwischen Spindelmutter (25) und Aktuator (10) bewirkt und/oder zwischen Spindel und Aktuator (10) bewirkt.

7. steer-by-wire-Lenkung nach einem der vorhergehenden Ansprüche, **dadurch gekennzeichnet, dass** der Rollengewindetrieb spielfrei ausgebildet ist.

8. steer-by-wire-Lenkung nach einem der vorhergehenden Ansprüche, **dadurch gekennzeichnet, dass** der Elektromotor als Vernier-Motor ausgebildet ist.

9. steer-by-wire-Lenkung, vorzugsweise Hinterachslenkung für ein Kraftfahrzeug, ausgebildet nach einem der vorhergehenden Ansprüche.

## Claims

1. Steer-by-wire steering system for a motor vehicle comprising a spindle drive (20) with a linearly displaceable threaded spindle (27), the spindle drive (20) being configured as a roller screw drive, **characterized in that** the roller screw drive has different degrees of efficiency in its drive direction and in its reverse drive direction, with the result that no returning of the steering system takes place in the spindle drive in the reverse drive direction.

2. Steer-by-wire steering system according to Claim 1, **characterized in that** the spindle drive (20) has such a high degree of efficiency in the drive direction that the spindle drive (20) is not of self-locking configuration in the drive direction.

3. Steer-by-wire steering system according to Claim 1 or 2, **characterized in that** the degree of efficiency of the roller screw drive is so low in the reverse drive direction that it is substantially self-locking.

4. Steer-by-wire steering system according to Claim 3, **characterized in that** a minimum torque is generated in the spindle drive (20) in the case of a maximum force which acts substantially on the threaded spindle (27) in the reverse drive direction, which minimum torque corresponds approximately to the stall torque of the drive motor (22) and is preferably equal to the stall torque of the drive motor (22).

5. Steer-by-wire steering system according to one of the preceding claims, **characterized in that** the roller screw drive is configured with roller recirculation.

6. Steer-by-wire steering system according to one of the preceding claims, **characterized in that** an inhibiting unit can be provided for locking the spindle drive (20), preferably electromagnetically actuated, which inhibiting unit brings about a coupling action in a positively locking and/or non-positive manner between the spindle nut (25) and the actuator (10) and/or between the spindle and the actuator (10).

7. Steer-by-wire steering system according to one of the preceding claims, **characterized in that** the roller screw drive is configured without backlash.

8. Steer-by-wire steering system according to one of the preceding claims, **characterized in that** the electric motor is configured as a vernier motor.

9. Steer-by-wire steering system, preferably rear axle steering system for a motor vehicle, configured according to one of the preceding claims.

## Revendications

1. Direction steer-by-wire (assistée par câble) pour un véhicule automobile présentant un entraînement par broche (20) avec une broche filetée (27) déplaçable linéairement, l'entraînement par broche (20) étant réalisé sous forme d'entraînement par broche à rouleaux, **caractérisée en ce que**
l'entraînement par broche à rouleaux présente des rendements différents dans son sens d'entraînement et dans son sens de retour, de telle sorte qu'il ne se produit pas de rappel de la direction dans l'entraînement par broche dans le sens de retour.

2. Direction steer-by-wire selon la revendication 1, **caractérisée en ce que** l'entraînement par broche (20) présente un rendement qui est élevé au point que, dans le sens d'entraînement, l'entraînement par broche (20) n'est pas conçu de manière autobloquante dans le sens d'entraînement.

3. Direction steer-by-wire selon la revendication 1 ou 2, **caractérisée en ce que** le rendement de l'entraînement par broche à rouleaux dans le sens de retour est faible au point que celui-ci est essentiellement autobloquant.

4. Direction steer-by-wire selon la revendication 3, **caractérisée en ce que** dans l'entraînement par broche (20), pour une force maximale agissant sensiblement axialement sur la broche filetée (27) dans le sens de l'entraînement de retour, un couple minimal est généré, qui correspond à peu près au couple d'arrêt du moteur d'entraînement (22), de préférence est égal au couple d'arrêt du moteur d'entraînement (22).

5. Direction steer-by-wire selon l'une des revendications précédentes, **caractérisée en ce que** la vis à rouleaux est réalisée avec un retour de rouleaux.

6. Direction steer-by-wire selon l'une des revendications précédentes, **caractérisée en ce que**, pour fixer l'entraînement par broche (20), il peut être prévu en outre une unité de blocage supplémentaire, de préférence à commande électromagnétique, qui provoque un couplage par complémentarité de forme et/ou par force entre l'écrou de broche (25) et l'actionneur (10) et/ou entre la broche et l'actionneur (10).

7. Direction steer-by-wire selon l'une des revendications précédentes, **caractérisée en ce que** l'entraînement à vis à rouleaux est conçu sans jeu.

8. Direction steer-by-wire selon l'une des revendications précédentes, **caractérisée en ce que** le moteur électrique est conçu sous la forme d'un moteur Vernier.

9. Direction steer-by-wire, de préférence direction de l'essieu arrière pour un véhicule automobile, réalisée selon l'une des revendications précédentes.
